# FASCICULE DE BREVET EUROPEEN

(11) **EP 3 762 262 B1**
(45) Date de publication et mention de la délivrance du brevet: **27.12.2023**
(21) Numéro de dépôt: 19717188.7
(22) Date de dépôt: 05.03.2019
(51) Int. Cl.: B60R 16/023, G05D 7/06, F16K 37/00, H02P 8/36

(54) **PROCÉDÉ DE CONTRÔLE D'UN SYSTÈME POUR VÉHICULE AUTOMOBILE**
VERFAHREN ZUR STEUERUNG EINES SYSTEMS FÜR EIN KRAFTFAHRZEUG
METHOD FOR CONTROLLING A SYSTEM FOR A MOTOR VEHICLE

(30) Priorité: 06.03.2018 FR 1851923
(43) Date de publication de la demande: 13.01.2021
(73) Titulaire: VALEO SYSTEMES THERMIQUES, 78320 Le Mesnil Saint-Denis (FR)
(72) Inventeur: PORTO, Muriel, 78322 LE MESNIL SAINT DENIS CEDEX (FR); GUENET, Thomas, 78322 LE MESNIL SAINT-DENIS CEDEX (FR); LIU, Jin-Ming, 78322 LE MESNIL SAINT-DENIS CEDEX (FR); NOUAINIA, Wissem, 78322 LE MESNIL SAINT-DENIS CEDEX (FR)
(74) Mandataire: Valeo Systèmes Thermiques
(86) Numéro de dépôt international: PCT/FR2019/050484
(87) Numéro de publication internationale: WO 2019/170995

(56) Documents cités:
- EP-A2- 0 825 708
- JP-A- 2001 275 397
- US-A- 5 880 565
- US-A1- 2016 313 037
- US-A1- 2018 043 748

## Description

La présente invention se rapporte au domaine des actionneurs pour un véhicule automobile, et plus particulièrement au contrôle d'un système comportant au moins un actionneur.

En effet, dans le domaine automobile, des éléments mobiles doivent être déplacés dans différentes positions afin de faire fonctionner le ou les systèmes selon un mode particulier de fonctionnement.

Ces éléments mobiles sont généralement déplacés au moyen d'un ou plusieurs actionneurs. Le ou les actionneurs sont généralement électriques et permettent de transformer une énergie électrique en un travail mécanique, tel qu'un déplacement en rotation et/ou en translation.

Plus particulièrement, l'élément mobile peut être un volet disposé dans une installation de chauffage, ventilation et/ou climatisation (également désignée sous l'acronyme anglais « HVAC » pour « Heating, ventilating and/or air-conditioning).

On notera qu'une installation de chauffage, ventilation et/ou climatisation de véhicule automobile est un boîtier, généralement disposé sous la planche du bord du véhicule.

Ladite installation de chauffage, ventilation et/ou climatisation comprend :
- au moins une entrée d'air, extérieur ou intérieur ;
- au moins une sortie d'air débouchant dans l'habitacle du véhicule ;
- des conduits d'air dans lesquels sont disposés un ou plusieurs échangeurs de chaleur qui vont permettre de conditionner thermiquement (c'est-à-dire réchauffer ou refroidir) un flux d'air les traversant (ledit flux d'air étant destiné à aboutir dans l'habitacle du véhicule par l'intermédiaire de ladite au moins une sortie d'air).

Il est, de plus, nécessaire que l'installation de chauffage, ventilation et/ou de climatisation soit équipée d'un pulseur d'air afin de générer un flux d'air suffisamment important pour que ledit flux d'air puisse traverser le ou les échangeurs de chaleur et aboutir dans l'habitacle du véhicule automobile.

Par ailleurs, un ou plusieurs volets sont disposés dans les conduits d'air de l'installation afin de permettre différents modes de fonctionnement de celle-ci, par exemple un mode climatisation, chauffage, déshumidification, etc. Le ou les volets, en fonction, de leur position dans le conduit d'air permettront, par exemple, de réguler le parcours du flux d'air dans le ou les échangeurs de chaleur.

Un volet, dit de mixage, peut par exemple aussi servir à réguler la quantité d'air chaud et d'air froid qui se mélangent avant distribution dans l'habitacle. Ledit volet de mixage, en fonction de sa position, permet ainsi de réguler plus finement la température de l'air distribuée dans l'habitacle par ladite installation de chauffe, ventilation et/ou climatisation.

On trouve également des éléments mobiles au niveau des dispositifs de détente disposés dans la boucle de climatisation d'un véhicule automobile. La boucle de climatisation comprend généralement des échangeurs de chaleur, un compresseur et des dispositifs de détente. Les éléments de ladite boucle sont reliés par des conduits dans lequel circule un fluide réfrigérant.

Le dispositif de détente, ainsi que les autres éléments de la boucle présentent chacun des fonctions différentes afin de faire subir un cycle thermodynamique au fluide réfrigérant, ceci permettant par exemple un transfert de calories d'un endroit à un autre.

Le ou les dispositifs de détente permettent de faire subir au fluide réfrigérant, traversant ledit dispositif de détente, la détente est généralement considérée comme isenthalpique. C'est-à-dire que la pression du fluide réfrigérant est abaissée sans variation (ou minime) de l'enthalpie du fluide réfrigérant.

Le dispositif de détente comprend, par exemple, un actionneur, une portion de conduit de fluide et un piston mobile.

Le piston mobile est disposé au moins en partie dans la portion de conduit de fluide. De plus, la position du piston dans ladite portion de conduit définit la section de passage du fluide réfrigérant apte à circuler dans ladite portion.

La détente subie par le fluide réfrigérant est variable en fonction de la section de passage de la portion du conduit de fluide. Plus particulièrement, plus la section de passage est petite, plus la détente est importante.

L'actionneur est relié audit piston mobile et permet de déplacer celui-ci afin de faire varier la section de passage du fluide réfrigérant dans ladite portion de conduit de fluide.

Il est nécessaire de faire varier la détente subie par le fluide réfrigérant circulant dans la boucle de climatisation en fonction des conditions de températures et de pression extérieure et/ou du mode de fonctionnement de la boucle de climatisation (mode pompe à chaleur, mode climatisation, mode déshumidification, etc.).

Par ailleurs, ledit système de véhicule automobile comprenant au moins un actionneur commande celui-ci, néanmoins pour cela il est nécessaire que ledit système connaisse la valeur de la position dudit actionneur, et donc par extension la position dudit organe mobile, afin de pouvoir envoyer une consigne de déplacement correcte à l'actionneur. Ledit système comprend généralement une mémoire volatile ou une mémoire longue qui permet au système de mémoriser la valeur de la position de l'actionneur.

Une valeur erronée de la position de l'actionneur va entraîner des instructions de déplacement incorrectes qui amèneront l'organe mobile dans une position dans laquelle il ne remplit pas la fonction attendue. Cela entraîne donc une dégradation des performances attendues du système du véhicule automobile.

De plus, si l'organe mobile est dans une position de butée et que l'instruction de déplacement l'amène à se déplacer au-delà de la position de butée, l'actionneur va « forcer » le déplacement de l'organe mobile contre la butée, cela a pour conséquence une usure prématurée des composants de l'actionneur (par exemple au niveau du train d'eng renages).

Ainsi, si la valeur de la position de l'actionneur est considérée comme incorrecte ou que la valeur de position a été perdue (par exemple parce le système a subi une mise hors-tension imprévue), il est nécessaire de déterminer la position de l'actionneur avant de commander à nouveau l'actionneur en vue de déplacer un organe mobile.

Pour cela, il est possible de procéder à une opération dite « d'autocalage » sur l'actionneur, c'est-à-dire que celui-ci va recevoir une consigne de déplacement qui va amener l'organe mobile dans une position de butée, cependant cela peut comme dans le cas précédent amener l'organe mobile à forcer contre la butée.

Le document US5880565A divulgue un procédé de contrôle d'un système pour véhicule automobile.

La présente invention vise ainsi à remédier au moins partiellement aux inconvénients cités ci-dessus en proposant un procédé de contrôle d'un système pour véhicule automobile, ledit système comportant au moins :
- un actionneur, par exemple configuré pour déplacer un organe mobile,
- une mémoire volatile dans laquelle est mémorisée au moins une information de position de l'actionneur,
- une mémoire longue dans laquelle sont mémorisées :
   ∘ au moins une information de position de l'actionneur,
   ∘ une information relative à la mise hors tension de l'actionneur, cette information prenant une première valeur lorsque la mise hors tension système a été effectuée de façon contrôlée et prenant une deuxième valeur lorsque le système a subi un défaut qui a provoqué l'effacement de la valeur en cours de la position de l'actionneur mémorisée dans la mémoire volatile, notamment lorsque le système a cessé d'être alimenté électriquement par erreur ou une communication entre le système et un calculateur a été coupée par erreur ,
ledit procédé comportant les étapes suivantes :
- lorsque le système est activé à la suite d'une mise hors tension, déterminer si la valeur de position mémorisée dans la mémoire longue est considérée comme correcte en fonction de l'information de mise hors tension ;
- si la valeur de position est considérée comme correcte, utiliser cette valeur pour commander l'actionneur ;
- si la valeur de position est considérée comme incorrecte, déterminer une valeur de la position de l'actionneur, notamment avant de commander à nouveau l'actionneur.

Dans le présent cas, on considère que la position de l'actionneur correspond à la position de l'organe mobile.

Selon une caractéristique possible, le procédé comporte les étapes suivantes :
- lire l'information de mise hors-tension,
- si l'information de mise hors-tension est égale à la première valeur, alors considérer la valeur de position mémorisée dans la mémoire longue comme correcte,
- si l'information de mise hors-tension est égale à la deuxième valeur, alors considérer la valeur de position mémorisée dans la mémoire longue comme incorrecte.

Selon l'invention, le procédé comporte les étapes suivantes :
- si l'information de mise hors-tension est égale à la deuxième valeur, alors la valeur de position mémorisée dans la mémoire longue est considérée comme incorrecte, une entité électronique envoie au système une valeur de position de l'actionneur.

Selon l'invention, l'entité électronique envoie au système une valeur de position de l'actionneur qui est calculée en fonction d'une pluralité de positions mémorisées dans la mémoire l'entité électronique.

Selon une autre caractéristique possible, si au moins les 5 dernières positions mémorisées dans la mémoire de l'entité électronique sont identiques, alors la dernière valeur de position mémorisée est considérée comme correcte et est envoyée au système comme valeur de position de l'actionneur pour que cette valeur soit mémorisée dans la mémoire volatile.

Selon une autre caractéristique possible, si les 7 dernières positions mémorisées dans la mémoire l'entité électronique sont différentes, l'entité électronique calcule la différence entre la valeur maximale de position mémorisée et la valeur minimale de position mémorisée, ceci sur un échantillon d'au moins des 7 dernières valeurs de position mémorisées, si cette différence est inférieure à 1 % du nombre du pas total de l'actionneur, alors la dernière position enregistrée est considérée comme correcte.

Selon une autre caractéristique possible, si les 7 dernières positions mémorisées dans la mémoire l'entité électronique sont différentes, le calculateur calcule la différence entre la valeur maximale de position mémorisée et la valeur minimale de position mémorisée, ceci sur un échantillon d'au moins des 7 dernières valeurs de position mémorisées, si cette différence est comprise entre 1 % et 3 % du nombre du pas total de l'actionneur, alors l'actionneur effectue un auto-calage simple.

Selon une autre caractéristique possible, si les 7 dernières positions mémorisées dans la mémoire l'entité électronique sont différentes, le calculateur calcule la différence entre la valeur maximale de position mémorisée et la valeur minimale de position mémorisée, ceci sur un échantillon d'au moins des 7 dernières valeurs de position mémorisées, si cette différence est supérieure à 3 % du nombre du pas total de l'actionneur, alors l'actionneur effectue un auto-calage complet.

Selon une autre caractéristique possible, si le système est mis hors-tension de manière contrôlée, alors la valeur de la position de l'actionneur est mémorisée dans la mémoire longue.

Selon une autre caractéristique possible, si le système est mis hors-tension de manière contrôlée, alors la valeur de l'information de mise hors-tension prend une valeur égale à la première valeur.

Selon une autre caractéristique possible, la valeur de position inscrite dans la mémoire volatile est égale de la dernière valeur de position mémorisée dans la mémoire longue, si la mise hors tension du système a été réalisée de façon contrôlée.

Selon une autre caractéristique possible, lors de l'activation du système, la valeur d'information relative à la mise hors tension de l'actionneur, prend, après lecture de ladite information, la deuxième valeur lorsque le système.

L'invention a également pour objet une installation de chauffage, ventilation et/ou climatisation, agencé pour mettre en ouvre le procédé ci-dessus.

L'invention sera mieux comprise et d'autres détails, caractéristiques et avantages de l'invention apparaîtront plus clairement à la lumière de la description suivante, fournie à titre d'exemple illustratif et non limitatif et en référence aux dessins annexés parmi lesquels :

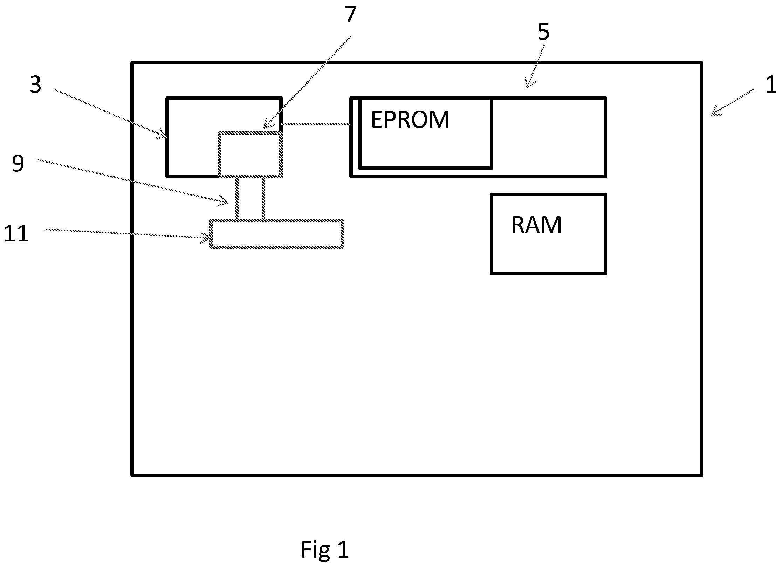

- la figure 1 représente une vue très schématique du système de véhicule automobile comportant au moins un actionneur.

La figure 1 représente une vue très schématique d'un système 1 pour véhicule automobile comportant au moins :
- un actionneur 3,
- une mémoire volatile RAM apte à stocker au moins une information, telle qu'une information relative à la position de l'actionneur 3, cette information est généralement une valeur de la position de l'actionneur 3 ;
- une mémoire longue EPROM apte à stocker au moins une information, telle qu'une information relative à la position de l'actionneur 3, cette information est généralement une valeur de la position de l'actionneur 3.

Le système 1 peut par ailleurs comporter un module de commande 5 qui est relié, d'une part, à un calculateur, tel que l'unité de commande électronique du véhicule (non représenté) et, d'autre part, à l'actionneur 3. La liaison entre l'unité de commande 5 et l'actionneur ou avec le calculateur est réalisée par l'intermédiaire d'un bus de communication BUS, tel qu'un bus LIN ou un bus CAN.

Dans un mode de réalisation non représenté, l'actionneur 3 peut également comprendre l'unité de commande 5, dans ce cas là, l'actionneur est dit « intelligent ».

On notera que la mémoire volatile RAM est localisée dans l'actionneur 3, mais que cette mémoire volatile RAM pourrait être localisé dans l'unité de commande ou à tout autre endroit du véhicule.

On notera également que la mémoire longue EPROM est, quant à elle, localisée dans l'unité de commande 5, mais que cette mémoire longue EPROM pourrait être localisé dans l'actionneur 3 ou à tout autre endroit du véhicule.

Par ailleurs, on notera que :
- une mémoire volatile RAM est une mémoire qui perd l'information stockée lorsque son alimentation électrique est interrompue ;
- une mémoire longue EPROM est une mémoire qui conserve l'information stockée même lorsque son alimentation électrique est interrompue ou coupée, une mémoire longue peut être également désignée sous le terme de mémoire rémanente ou mémoire non-volatile.

Plus particulièrement, l'actionneur 3 est un dispositif apte à transformer une énergie électrique qui lui ait fournie en un travail mécanique. Dans le domaine automobile, un actionneur comprend généralement un moteur électrique 7, un train d'engrenages (non représenté) et un arbre de sortie 9 apte à être relié (directement ou indirectement) à un organe mobile 11.

Le moteur électrique 7 est relié à l'arbre de sortie 9 par l'intermédiaire du train d'engrenage. L'énergie électrique fournie au moteur électrique est transformée en un travail mécanique, généralement un mouvement de rotation (et/ou de translation), par l'intermédiaire de l'arbre de sortie 9. Le train d'engrenages permet par exemple d'effectuer une transformation du mouvement du moteur afin de rendre celui-ci compatible avec le déplacement souhaité de l'organe mobile 11 par l'intermédiaire de l'arbre de sortie 9, cela permet également de réguler le couple et la vitesse de rotation de l'arbre de sortie 9.

Plus particulièrement, la mémoire volatile RAM est configurée pour mémoriser au moins une information de position de l'actionneur IP_{RAM}.

Tandis que la mémoire longue EPROM est configurée pour mémoriser, d'une part, au moins une information de position de l'actionneur IP_{ROM}, et d'autre part, une information relative à la mise hors tension I_{HT} de l'actionneur 3.

L'information relative à la mise hors tension I_{HT} de l'actionneur 3 peut prendre l'une des deux valeurs, suivantes :
- une première valeur v1 lorsque la mise hors tension du système 1 a été effectuée de façon contrôlée ;
- une deuxième valeur v2 lorsque le système a subi un défaut qui a provoqué l'effacement de la valeur en cours de la position de l'actionneur mémorisée dans la mémoire volatile (RAM) (c'est-à-dire l'information relative à la position de l'actionneur mémorisée dans la mémoire volatile), notamment lorsque le système 1 a cessé d'être alimenté électriquement par erreur ou qu'une communication entre le système 1 et un calculateur du véhicule a été coupée par erreur.

Ainsi, le système 1 est configuré pour, après activation ou réactivation du système 1 à la suite d'une mise hors tension de celui-ci, lire (E1) la valeur I_{ROM} de position mémorisée dans la mémoire longue (EPROM) et considérer si cette valeur est correcte ou incorrecte en fonction de l'information de mise hors tension I_{HT}. En effet, lorsque le système 1 est mis hors-tension de manière contrôlée, alors la valeur IP de la position de l'actionneur 3 est mémorisée dans la mémoire longue EPROM.

De plus, la valeur de l'information de mise hors-tension I_{HT} prend une valeur égale à la première valeur v1.

Par ailleurs, la valeur IP_{RAM} de position inscrite dans la mémoire volatile RAM est égale de la dernière valeur de position mémorisée dans la mémoire longue EPROM, si la mise hors tension du système a été réalisée de façon contrôlée.

On notera cependant que l'information relative à la mise hors tension de l'actionneur I_{HT}, prend, après lecture de ladite information, pour valeur la deuxième valeur v2.

Ainsi, dans ce cas, la valeur de position de l'actionneur IP_{ROM} mémorisée dans la mémoire longue EPROM est considérée comme correcte. Le système 1 utilise alors cette valeur pour commander le déplacement l'actionneur 3.

Plus particulièrement, la valeur IP_{ROM} de position de l'actionneur mémorisée dans la mémoire longue EPROM est écrite dans la mémoire volatile RAM. Le système 1 contrôle alors le déplacement de l'actionneur 3 en fonction de la valeur IP_{RAM} de position de l'actionneur mémorisée dans la mémoire volatile RAM.

En fonction des déplacements de l'actionneur 3, la valeur IP_{RAM} de position dudit actionneur mémorisée dans la mémoire volatile est mise à jour (soit par l'actionneur 3, soit par l'unité de commande 5).

Cependant, si l'information de mise hors tension I_{HT} est égale à la deuxième valeur v2, la valeur de position mémorisée dans la mémoire longue EPROM est considérée comme incorrecte. En effet, dans ce cas, on peut supposer que la valeur IP_{ROM} de la position de l'actionneur mémorisée dans la mémoire longue n'est pas correcte, car le système 1 n'a pu être mis hors-tension de manière contrôlée et donc n'a pu enregistrer la valeur IP_{ROM} correcte de la position de l'actionneur dans la mémoire longue EPROM, ceci en se basant sur la valeur IP_{RAM} de la position de l'actionneur mémorisée dans la mémoire volatile RAM, cette dernière valeur correspondant à la position réelle de l'actionneur 3 , cette valeur étant mise à jour en fonction des déplacements opérés par ledit actionneur.

Il est donc nécessaire de déterminer la position de l'actionneur 3, avant de commander à nouveau celui-ci.

Dans le cas présent, c'est un calculateur du véhicule qui détermine la valeur l'information de mise hors tension I_{HT}, mais cela peut être n'importe quelle entité électronique configurée pour remplir ce rôle.

Le calculateur du véhicule peut, par exemple, envoyer une valeur de position IP de l'actionneur 3 lorsque l'information relative à la position de l'actionneur 3 est considérée comme incorrecte.

Pour cela, le calculateur calcule, en fonction d'une pluralité de positions mémorisées dans la mémoire le calculateur du véhicule, une valeur (v_{cal}) probable de position de l'actionneur (3).

Plus particulièrement, si au moins les cinq dernières positions mémorisées dans la mémoire le calculateur sont identiques, alors la dernière valeur de position mémorisée est considérée comme correcte et est envoyée au système (1) comme valeur de position de l'actionneur (3) pour que cette valeur soit mémorisée, c'est-à-dire inscrite, dans la mémoire volatile (RAM). Le système 1, et l'actionneur 3, se base alors sur cette valeur de position de l'actionneur 3 inscrite dans la mémoire volatile RAM pour contrôler le déplacement de l'actionneur 3 en conséquence.

Cependant, si les 7 dernières positions mémorisées dans la mémoire du calculateur sont différentes, alors le calculateur calcule la différence entre la valeur maximale de position mémorisée et la valeur minimale de position mémorisée, ceci sur un échantillon correspondant à au moins sept des dernières valeurs de position mémorisées, et si cette différence est inférieure à 1 % du nombre de pas total de l'actionneur, alors la dernière position enregistrée est considérée comme correcte. Ainsi, le calculateur communique cette valeur de position au système 1 pour que celle-ci soit inscrite dans la mémoire volatile RAM et que le système 1 se base alors sur cette valeur de position inscrite pour contrôler le déplacement de l'actionneur 3 en conséquence.

Néanmoins, si cette différence est comprise entre 1 % et 3 % du nombre du pas total de l'actionneur 3, alors l'actionneur 3 effectue un auto-calage simple. L'auto-calage simple consiste à faire déplacer l'actionneur d'un nombre de pas égal, au maximum, de la moitié du nombre de pas total de l'actionneur, dans la direction dans laquelle l'organe mobile est le plus proche d'une butée. On peut ainsi ramener l'organe mobile dans une position connue en limitant l'activation de l'actionneur alors que l'organe mobile est en butée. On restreint ainsi l'usure du train d'engrenages de l'actionneur.

L'autre possibilité est que si la différence entre la valeur maximale de position mémorisée et la valeur minimale de position mémorisée, ceci sur un échantillon d'au moins sept des dernières valeurs de position mémorisées dans la mémoire du calculateur, est supérieure à 3 % du nombre du pas total de l'actionneur, alors l'actionneur 3 effectue un auto-calage complet. L'auto-calage complet consiste à faire déplacer l'actionneur d'un nombre de pas égal au nombre de pas total de l'actionneur (ceci pour une direction quelconque de déplacement de l'organe mobile). Pour une différence supérieure à 3 %, la valeur IP_{ROM} de la position de l'actionneur mémorisée dans la mémoire longue EPROM ne peut être considérée comme une valeur représentative ou correcte de la position réelle de l'actionneur et par extension de la position de l'organe mobile.

Ainsi, une fois l'autocalage réalisé, la valeur IP de la position de l'actionneur 3 est enregistrée dans la mémoire volatile RAM. Cette valeur mémorisée dans la mémoire volatile RAM permet alors au système de déplacer l'actionneur 3 de façon appropriée.

Lorsque le système 1 est activé, le procédé de contrôle se déclenche et comprend un ou plusieurs des étapes suivantes :
- lire l'information relative à la mise hors tension de l'actionneur I_{HT} ;
- puis mettre la valeur de l'information relative à la mise hors tension de l'actionneur I_{HT} égale à la deuxième valeur v2 ;
- si 'information relative à la mise hors tension de l'actionneur I_{HT} est égale à la première valeur v1 ;
   ∘ utiliser la valeur de la position de l'actionneur mémorisée dans la mémoire longue ROM (car celle-ci est correcte), c'est-à-dire,
      ▪ inscrire la valeur de la position mémorisée dans la mémoire ROM dans la mémoire RAM ;
      ▪ envoyer une commande de déplacement à l'actionneur basée sur la valeur de position mémorisée dans la mémoire ROM ;
- si l'information relative à la mise hors tension de l'actionneur I_{HT} est égale à la deuxième valeur v2.

Selon un exemple de mise en oeuvre de l'invention, le système est agencé pour générer une information relative à l'endormissement correct du système, qui notamment est apte à prendre une première valeur correcte notamment dans l'EPROM, notamment après écriture valeur position issue de la RAM dans l'EPROM.

Ainsi dès réactivation du dispositif de détente, l'information relative à l'endormissement prend la deuxième valeur, cette fois incorrecte.

Notamment, après un défaut, au moment de la réactivation, le calculateur vérifie l'information de l'endormissement.

Si une mise hors tension suite à un défaut est détecté, alors il est déterminé une valeur de position de l'actionneur.

## Revendications

1. Procédé de contrôle d'un système (1) pour véhicule automobile, ledit système comportant au moins :
- un actionneur,
- une mémoire volatile (RAM) dans laquelle est mémorisée au moins une information de position de l'actionneur (IP_{RAM}),
- une mémoire longue (EPROM) dans laquelle sont mémorisées :
∘ au moins une information de position (IP_{ROM}) de l'actionneur,
∘ une information relative à la mise hors tension de l'actionneur (I_{HT}), cette information prenant une première valeur (v1) lorsque la mise hors tension système a été effectuée de façon contrôlée et prenant une deuxième valeur (v2) lorsque le système a subi un défaut qui a provoqué l'effacement de la valeur en cours de la position de l'actionneur mémorisée dans la mémoire volatile (RAM), notamment lorsque le système a cessé d'être alimenté électriquement par erreur ou une communication entre le système et un calculateur a été coupée par erreur,
ledit procédé comportant les étapes suivantes :
- lorsque le système (1) est activé à la suite d'une mise hors tension, déterminer (E1) si la valeur de position mémorisée dans la mémoire longue (EPROM) est considérée comme correcte en fonction de l'information de mise hors tension (I_{HT}) ;
- si la valeur de position est considérée comme correcte, utiliser cette valeur pour commander l'actionneur ;
- si la valeur de position est considérée comme incorrecte, déterminer une valeur de la position de l'actionneur (avant de commander à nouveau l'actionneur)
- si l'information de mise hors-tension (I_{HT}) est égale à la deuxième valeur, alors la valeur de position mémorisée dans la mémoire longue (EPROM) est considérée comme incorrecte, une entité électronique, tel qu'un calculateur du véhicule, envoie au système (1) une valeur de position (IP) de l'actionneur (3)
le procédé étant **caractérisé en ce que** le calculateur envoie au système (1) une valeur (v_{cal}) de position de l'actionneur (3) qui est calculée en fonction d'une pluralité de positions mémorisées dans la mémoire le calculateur.

2. Procédé selon la revendication précédente, comportant les étapes suivantes :
- lire l'information de mise hors-tension (I_{HT}),
- si l'information de mise hors-tension (I_{HT}) est égale à la première valeur (v1), alors considérer la valeur de position (IP_{ROM}) mémorisée dans la mémoire longue (EPROM) comme correcte,
- si l'information de mise hors-tension (I_{HT}) est égale à la deuxième valeur (v2), alors considérer la valeur de position (IP_{ROM}) mémorisée dans la mémoire longue (EPROM) comme incorrecte.

3. Procédé selon l'une des revendications précédentes, **caractérisé en ce que** si au moins les 5 dernières positions mémorisées dans la mémoire le calculateur sont identiques, alors la dernière valeur de position mémorisée est considérée comme correcte et est envoyée au système (1) comme valeur de position de l'actionneur (3) pour que cette valeur soit mémorisée dans la mémoire volatile (RAM).

4. Procédé selon l'une des revendication 1 ou 2, **caractérisé en ce que** si les 7 dernières positions mémorisées dans la mémoire le calculateur sont différentes, le calculateur calcule la différence entre la valeur maximale de position mémorisée et la valeur minimale de position mémorisée, ceci sur un échantillon d'au moins des 7 dernières valeurs de position mémorisées, si cette différence est inférieure à 1 % du nombre du pas total de l'actionneur, alors la dernière position enregistrée est considérée comme correcte.

5. Procédé selon l'une des revendications 1 ou 2, **caractérisé en ce que** si les 7 dernières positions mémorisées dans la mémoire le calculateur sont différentes, le calculateur calcule la différence entre la valeur maximale de position mémorisée et la valeur minimale de position mémorisée, ceci sur un échantillon d'au moins des 7 dernières valeurs de position mémorisées, si cette différence est comprise entre 1 % et 3 % du nombre du pas total de l'actionneur, alors l'actionneur (3) effectue un auto-calage simple.

6. Procédé selon l'une des revendications 1 ou 2, **caractérisé en ce que** si les 7 dernières positions mémorisées dans la mémoire le calculateur sont différentes, le calculateur calcule la différence entre la valeur maximale de position mémorisée et la valeur minimale de position mémorisée, ceci sur un échantillon d'au moins des 7 dernières valeurs de position mémorisées, si cette différence est supérieure à 3 % du nombre du pas total de l'actionneur, alors l'actionneur (3) effectue un auto-calage complet.

7. Procédé selon l'une quelconque des revendications précédentes, **caractérisé en ce que** si le système est mis hors-tension de manière contrôlée, alors la valeur (IP) de la position de l'actionneur (3) est mémorisée dans la mémoire longue (EPROM).

8. Procédé selon l'une quelconque des revendications précédentes, **caractérisé en ce que** si le système est mis hors-tension de manière contrôlée, alors la valeur de l'information de mise hors-tension (I_{HT}) prend une valeur égale à la première valeur (v1).

9. Procédé selon l'une quelconque des revendications précédentes, **caractérisé en ce que** la valeur de position inscrite dans la mémoire volatile est égale de la dernière valeur de position mémorisée dans la mémoire longue, si la mise hors tension du système a été réalisée de façon contrôlée.

10. Procédé selon l'une quelconque des revendications précédentes, **caractérisé en ce que** lors de l'activation du système (1), la valeur d'information relative à la mise hors tension de l'actionneur (I_{HT}), prend, après lecture de ladite information, la deuxième valeur (v2).

## Patentansprüche

1. Verfahren zur Steuerung eines Systems (1) für ein Kraftfahrzeug, wobei das System mindestens Folgendes umfasst:
- ein Betätigungselement,
- einen flüchtigen Speicher (RAM), in dem mindestens eine Positionsinformation des Betätigungselements (IP_{RAM}) gespeichert ist,
- einen Langzeitspeicher (EPROM), in dem Folgendes gespeichert ist:
o mindestens eine Positionsinformation (IP_{ROM}) des Betätigungselements,
o eine Information über die Abschaltung des Betätigungselements (I_{HT}), wobei diese Information einen ersten Wert (v1) annimmt, wenn die Systemabschaltung kontrolliert erfolgt ist, und einen zweiten Wert (v2) annimmt, wenn das System eine Störung erfahren hat, die die Löschung des aktuellen Werts der Position des Betätigungselements, der in dem flüchtigen Speicher (RAM) gespeichert war, verursacht hat, insbesondere wenn das System aufgrund eines Fehlers nicht mehr mit Strom versorgt wurde oder eine Kommunikation zwischen dem System und einem Rechner aufgrund eines Fehlers unterbrochen wurde,
wobei das Verfahren die folgenden Schritte umfasst:
- wenn das System (1) im Anschluss an eine Abschaltung aktiviert wird, Bestimmen (E1), ob der in dem Langzeitspeicher (EPROM) gespeicherte Positionswert in Abhängigkeit von der Abschaltungsinformation (I_{HT}) als korrekt betrachtet wird;
- wenn der Positionswert als korrekt betrachtet wird, Verwenden dieses Werts, um das Betätigungselement anzusteuern;
- wenn der Positionswert als falsch betrachtet wird, Bestimmen eines Werts der Position des Betätigungselements (vor dem erneuten Ansteuern des Betätigungselements),
- wenn die Abschaltungsinformation (I_{HT}) gleich dem zweiten Wert ist, also der in dem Langzeitspeicher (EPROM) gespeicherte Positionswert als falsch betrachtet wird, sendet eine elektronische Einheit, wie etwa ein Rechner des Fahrzeugs, einen Positionswert (IP) des Betätigungselements (3) an das System (1),
wobei das Verfahren **dadurch gekennzeichnet ist, dass** der Rechner einen Positionswert (v_{cal}) des Betätigungselements (3) an das System (1) sendet, der in Abhängigkeit von einer Vielzahl von Positionen berechnet wird, die in dem Speicher des Rechners gespeichert sind.

2. Verfahren nach dem vorhergehenden Anspruch, das die folgenden Schritte umfasst:
- Lesen der Abschaltungsinformation (I_{HT}),
- wenn die Abschaltungsinformation (I_{HT}) gleich dem ersten Wert (v1) ist, dann Betrachten des in dem Langzeitspeicher (EPROM) gespeicherten Positionswerts (IP_{ROM}) als korrekt,
- wenn die Abschaltungsinformation (I_{HT}) gleich dem zweiten Wert (v2) ist, dann Betrachten des in dem Langzeitspeicher (EPROM) gespeicherten Positionswerts (IP_{ROM}) als falsch.

3. Verfahren nach einem der vorhergehenden Ansprüche, **dadurch gekennzeichnet, dass**, wenn mindestens die 5 letzten in dem Speicher des Rechners gespeicherten Positionen identisch sind, der letzte gespeicherte Positionswert als korrekt betrachtet wird und als Positionswert des Betätigungselements (3) an das System (1) gesendet wird, damit dieser Wert in dem flüchtigen Speicher (RAM) gespeichert wird.

4. Verfahren nach einem der Ansprüche 1 oder 2, **dadurch gekennzeichnet, dass**, wenn die 7 letzten in dem Speicher des Rechners gespeicherten Positionen unterschiedlich sind, der Rechner die Differenz zwischen dem gespeicherten maximalen Positionswert und dem gespeicherten minimalen Positionswert berechnet, und zwar anhand einer Probe mindestens der 7 letzten gespeicherten Positionswerte, und, wenn diese Differenz kleiner als 1 % der Gesamtschrittzahl des Betätigungselements ist, dann die letzte aufgezeichnete Position als korrekt betrachtet wird.

5. Verfahren nach einem der Ansprüche 1 oder 2, **dadurch gekennzeichnet, dass**, wenn die 7 letzten in dem Speicher des Rechners gespeicherten Positionen unterschiedlich sind, der Rechner die Differenz zwischen dem gespeicherten maximalen Positionswert und dem gespeicherten minimalen Positionswert berechnet, und zwar anhand einer Probe mindestens der 7 letzten gespeicherten Positionswerte, und, wenn diese Differenz zwischen 1 % und 3 % der Gesamtschrittzahl des Betätigungselements liegt, dann das Betätigungselement (3) eine einfache Selbst justierung vornimmt.

6. Verfahren nach einem der Ansprüche 1 oder 2, **dadurch gekennzeichnet, dass**, wenn die 7 letzten in dem Speicher des Rechners gespeicherten Positionen unterschiedlich sind, der Rechner die Differenz zwischen dem gespeicherten maximalen Positionswert und dem gespeicherten minimalen Positionswert berechnet, und zwar anhand einer Probe mindestens der 7 letzten gespeicherten Positionswerte, und, wenn dieser Unterschied größer als 3 % der Gesamtschrittzahl des Betätigungselements ist, dann das Betätigungselement (3) eine komplette Selbst justierung vornimmt.

7. Verfahren nach einem beliebigen der vorhergehenden Ansprüche, **dadurch gekennzeichnet, dass**, wenn das System kontrolliert abgeschaltet wird, der Wert (IP) der Position des Betätigungselements (3) in dem Langzeitspeicher (EPROM) gespeichert wird.

8. Verfahren nach einem beliebigen der vorhergehenden Ansprüche, **dadurch gekennzeichnet, dass**, wenn das System kontrolliert abgeschaltet wird, der Wert der Abschaltungsinformation (I_{HT}) einen Wert gleich dem ersten Wert (v1) annimmt.

9. Verfahren nach einem beliebigen der vorhergehenden Ansprüche, **dadurch gekennzeichnet, dass** der in dem flüchtigen Speicher erfasste Positionswert gleich dem letzten in dem Langzeitspeicher gespeicherten Positionswert ist, wenn die Abschaltung des Systems kontrolliert durchgeführt wurde.

10. Verfahren nach einem beliebigen der vorhergehenden Ansprüche, **dadurch gekennzeichnet, dass** bei Aktivierung des Systems (1) der Informationswert bezüglich der Abschaltung des Betätigungselements (I_{HT}) nach dem Lesen der Information den zweiten Wert (v2) annimmt.

## Claims

1. Method for controlling a system (1) for a motor vehicle, said system comprising at least:
- an actuator,
- a volatile memory (RAM) storing at least one item of actuator position information (IP_{RAM}),
- a long-term memory (EPROM) storing:
o at least one item of actuator position information (IP_{ROM}),
o information relating to the shutdown of the actuator (I_{HT}), this information taking a first value (v1) when the system was shut down in a controlled manner and taking a second value (v2) when the system experienced a fault that caused the erasure of the current value of the position of the actuator stored in the volatile memory (RAM), in particular when the system inadvertently stopped being supplied with electric power or communication between the system and a computer was inadvertently disconnected,
said method comprising the following steps:
- when the system (1) is activated following a shutdown, determining (E1) whether the position value stored in the long-term memory (EPROM) is considered to be correct on the basis of the shutdown information (I_{HT});
- if the position value is considered to be correct, using this value to command the actuator;
- if the position value is considered to be incorrect, determining a value of the position of the actuator (before commanding the actuator again);
- if the shutdown information (I_{HT}) is equal to the second value, then the position value stored in the long-term memory (EPROM) is considered to be incorrect, and an electronic entity, such as a computer of the vehicle, sends a position value (IP) of the actuator (3) to the system (1);
the method being **characterized in that** the computer sends a position value (v_{cal}) of the actuator (3) to the system (1) that is calculated on the basis of a plurality of positions stored in the computer memory.

2. Method according to the preceding claim, comprising the following steps:
- reading the shutdown information (I_{HT}),
- if the shutdown information (I_{HT}) is equal to the first value (v1), then considering the position value (IP_{ROM}) stored in the long-term memory (EPROM) to be correct,
- if the shutdown information (I_{HT}) is equal to the second value (v2), then considering the position value (IP_{ROM}) stored in the long-term memory (EPROM) to be incorrect.

3. Method according to either of the preceding claims, **characterized in that**, if at least the last 5 positions stored in the computer memory are identical, then the last stored position value is considered to be correct and is sent to the system (1) as the position value of the actuator (3) so that this value is stored in the volatile memory (RAM).

4. Method according to Claim 1 or 2, **characterized in that**, if the last 7 positions stored in the computer memory are different, the computer calculates the difference between the maximum stored position value and the minimum stored position value, specifically on a sample of at least the last 7 stored position values, and if this difference is less than 1% of the total step number of the actuator, then the last recorded position is considered to be correct.

5. Method according to either of Claims 1 and 2, **characterized in that**, if the last 7 positions stored in the computer memory are different, the computer calculates the difference between the maximum stored position value and the minimum stored position value, specifically on a sample of at least the last 7 stored position values, and if this difference is between 1% and 30 of the total step number of the actuator, then the actuator (3) performs simple self-calibration.

6. Method according to either of Claims 1 and 2, **characterized in that**, if the last 7 positions stored in the computer memory are different, the computer calculates the difference between the maximum stored position value and the minimum stored position value, specifically on a sample of at least the last 7 stored position values, and if this difference is greater than 30 of the total step number of the actuator, then the actuator (3) performs full self-calibration.

7. Method according to any one of the preceding claims, **characterized in that**, if the system is shut down in a controlled manner, then the value (IP) of the position of the actuator (3) is stored in the long-term memory (EPROM).

8. Method according to any one of the preceding claims, **characterized in that**, if the system is shut down in a controlled manner, then the value of the shutdown information (I_{HT}) takes a value equal to the first value (v1) .

9. Method according to any one of the preceding claims, **characterized in that** the position value written to the volatile memory is equal to the last position value stored in the long-term memory, if the system was shut down in a controlled manner.

10. Method according to any one of the preceding claims, **characterized in that**, when the system (1) is activated, the information value relating to the shutdown of the actuator (I_{HT}) takes the second value (v2) after said information is read.
